# EUROPEAN PATENT APPLICATION

(11) **EP 2 388 459 A1**
(43) Date of publication of application: **23.11.2011**
(21) Application number: 10731299.3
(22) Date of filing: 15.01.2010
(51) Int. Cl.: F02D 29/00

(54) **CONTROL DEVICE FOR VEHICLE**

(30) Priority: 15.01.2009 JP 2009006644
(71) Applicant: Toyota Jidosha Kabushiki Kaisha, Toyota-shi, Aichi 471-8571 (JP)
(72) Inventor: TAKEUCHI, Shinichi, Toyota-shi, Aichi 471-8571 (JP); SAIGO, Yusuke, Toyota-shi, Aichi 471-8571 (JP)
(74) Representative: Albutt, Anthony John
(86) International application number: PCT/JP2010/050423
(87) International publication number: WO 2010/082630

(57) **Abstract**

In an embodiment of a control apparatus for a vehicle of the present invention, there is a control apparatus for a vehicle that is applied to a vehicle in which an engine and a manual transmission are mounted, the engine being connected to the manual transmission via a clutch, and that includes a suppression means that suppresses engine output at the time of vehicle acceleration from standstill. In the control apparatus for a vehicle, the suppression means sets the degree of engine output suppression so as to be lower after the drive force peak of the engine has been passed in comparison to before it has been passed.

## Description

### Technical Field

The present invention relates to a control apparatus for a vehicle in which an engine (internal combustion engine) is connected to a manual transmission via a clutch.

### Background Art

In a vehicle having an engine (internal combustion engine) mounted therein, the speed of engine output is changed by a transmission in order to obtain a necessary running torque and vehicle speed, and then transmitted to wheels. As transmissions mounted in vehicles, there is an automatic transmission in which the transmission gear ratio between the engine and the drive wheels is automatically set so as to be optimal, and a manual transmission.

In a vehicle having an automatic transmission mounted therein, a gearshift map that has gear shift lines (gear switching lines) for obtaining an optimal gear according to the vehicle speed and accelerator opening degree is stored in an ECU (Electronic Control Unit) or the like, and a gear switching operation is automatically performed in accordance with the gearshift map.

On the other hand, with a vehicle having a manual transmission mounted therein, basically the driver selects an arbitrary gear, and therefore such a vehicle has the advantage of a high degree of freedom in running, such as the ability to travel with superior drive force by delaying up-shifting until the engine rotation speed has become high. Also, since the engine is connected to the manual transmission via a clutch operated by the driver, it is also possible to achieve rapid acceleration from standstill according to the driver's request by, for example, performing a rapid clutch operation (engagement) in a state in which the engine rotation speed is held high by, for example, racing the engine in the stopped state.

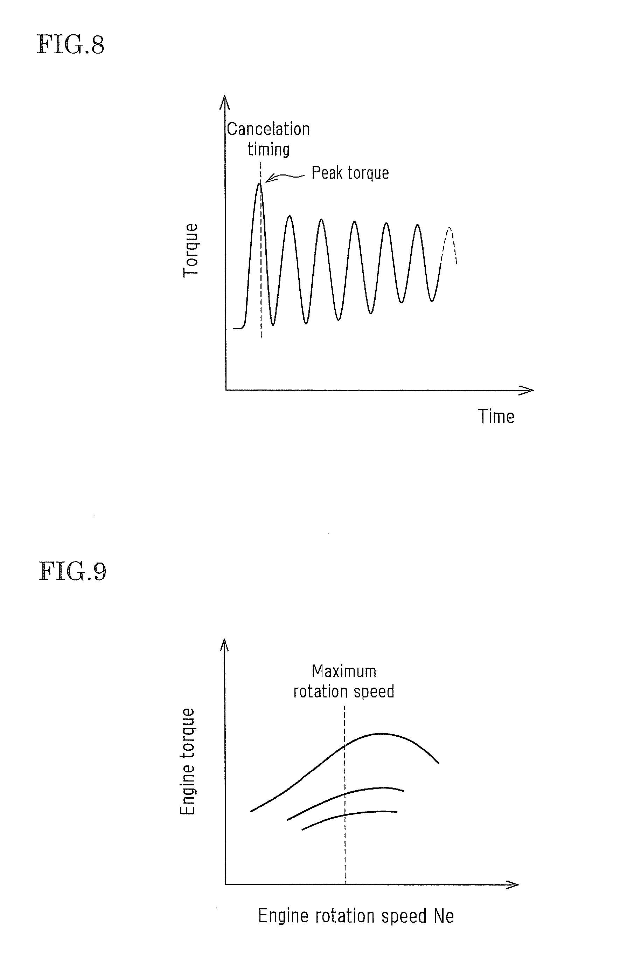

However, with a vehicle having a manual transmission mounted therein, the torque input to the drive-train during acceleration from standstill varies in a wavelike manner (e.g., see FIG. 8), and the drive-train needs to be designed so as to be able to withstand the peak torque of such torque variation. In this case, if the drive-train is designed envisioning the case where the peak torque becomes extremely high during rapid acceleration from standstill or the like, the drive-train will increase in size.

In order to resolve such an issue, control is executed to suppress the engine maximum rotation speed (hereinafter, also referred to as "maximum rotation speed suppression control") until the vehicle reaches a predetermined speed during acceleration from standstill, for example. Performing such maximum rotation speed suppression control enables reducing the peak torque input to the drive-train during acceleration from standstill (hereinafter, also referred to as "drive force peak"), and reducing the size of the drive-train.

Note that PTL 1 listed below discloses technology for adjusting the output torque of an engine during acceleration from standstill. With the technology disclosed in PTL 1, in a vehicle in which clutch (automatic clutch) engagement is performed through a clutch actuator operation when an acceleration from standstill request from the driver has been detected, the automatic clutch is protected by adjusting the output torque of the engine such that the rotation speed of the engine is below a maximum allowable value until completion of clutch engagement by the clutch actuator operation.

### Citation List

### Patent Literature

PTL1: JP 2004-211559A
PTL2: JP 2005-016468A
PTL3: JP H09-039754A

### Summary of Invention

### Technical Problem

Incidentally, with a vehicle in which the above-described maximum rotation speed suppression control is incorporated, even if the driver presses the accelerator pedal far down when a large amount of drive force is necessary during rapid acceleration from standstill, acceleration from standstill on a hill, or the like, sufficient drive force cannot be output since the rise of the engine rotation speed is restricted. Specifically, there are cases where, as shown in FIG. 9 for example, when the rise of the engine rotation speed is restricted during rapid acceleration from standstill, acceleration from standstill on a hill, or the like, it is impossible to utilize the maximum torque, which is greater than or equal to the engine maximum rotation speed, and therefore the drive force during acceleration from standstill is insufficient, making it impossible to obtain sufficient acceleration performance and hill-climbing performance. If the degree to which the maximum rotation speed is suppressed is lowered in consideration of such an issue, there are cases where shock occurs during clutch engagement.

Note that although it is possible to ensure acceleration performance and the like during acceleration from standstill if such maximum rotation speed suppression control is not carried out, the peak torque during acceleration from standstill will be input to the drive-train., thus requiring an increase in the size of the drive-train in order to be able to withstand the peak torque, as described above.

The present invention has been achieved in light of such circumstances, and an object thereof is to provide a control apparatus for a vehicle that can improve acceleration performance and hill-climbing performance, while reducing the drive force torque input to the drive-train during acceleration from standstill.

### Solution to Problem

The present invention is a control apparatus for a vehicle that is applied to a vehicle in which an engine and a manual transmission are mounted, the engine being connected to the manual transmission via a clutch, and that includes a suppression means that suppresses engine output (specifically, engine rotation speed, engine torque, or the like) at the time of vehicle acceleration from standstill, wherein the suppression means sets a degree of engine output suppression so as to be lower after a drive force peak of the engine has been passed in comparison to before the drive force peak of the engine has been passed.

In the present invention, the processing for lowering the degree of engine output suppression also includes the case of canceling the engine output suppression.

According to the present invention, the degree of engine output suppression is raised until after the drive force peak has been passed during vehicle acceleration from standstill, thus enabling reducing the drive force peak that is input to the drive-train. Moreover, the degree of engine output suppression is lowered after the drive force peak has been passed, thus enabling increasing the drive force. This enables ensuring drive force during acceleration from standstill, while reducing the drive force peak that is input to the drive-train during acceleration from standstill, thus making it possible to improve acceleration performance and hill-climbing performance.

As a specific configuration of the present embodiment, a configuration is possible in which the degree of engine output suppression is set so as to be lower in a case where an engagement operation of the clutch is rapid in comparison to a case where the engagement operation of the clutch is slow. In this case, if the driver has quickly performed the clutch engagement operation in an attempt to rapidly accelerate from standstill, for example, the driver's intention is reflected by lowering the degree of engine output suppression after the drive force peak has been passed, thus enabling prioritizing the ensuring of drive force.

As another specific configuration, a configuration is possible in which the degree of engine output suppression is set so as to be lower in a case where decline of the engine rotation speed after the drive force peak has been passed is large in comparison to a case where decline of the engine rotation speed after the drive force peak has been passed is small. As one specific example, the degree of engine output suppression is set lower in the case where the reduction gradient (degree of reduction) of the engine rotation speed or the amount of decrease (amplitude) in the engine rotation speed after the drive force peak has been passed is large, in comparison to the case where it is small.

Also, as another specific configuration, a configuration is possible in which the degree of engine output suppression is set so as to be lower in a case where a drive force generation request (e.g., accelerator opening degree) is greater than a determination threshold value.

Here, in the present invention, the determination regarding the passing of the drive force peak is, for example, a determination of whether the drive force peak has been passed at the point in time when the engine rotation speed has dropped after having remained at the maximum rotation speed while the accelerator pedal is being sufficiently pressed down (specifically, while accelerator opening degree > α, which is described later). In other words, the clutch enters the connected state if the engine rotation speed drops after having remained at the maximum rotation speed, thus enabling estimating that the peak torque has been passed at that point in time.

The following is a description of the above point. Firstly, if the clutch generates engagement torque while "engine output shaft speed while accelerator pedal is sufficiently pressed down Nout >> transmission input shaft speed during acceleration from standstill Nin", torque is input to the engine such that the engine output shaft speed Nout decreases. In contrast, this torque is not input to the engine while the clutch is disengaged. Accordingly, in general, the engine output shaft speed Nout starts decreasing if the clutch starts generating engagement torque during acceleration from standstill.

In view of the above, when "engine output shaft speed Nout = transmission input shaft speed Nin", that is to say, when the clutch has sufficiently generated engagement force, the engine output shaft speed Nout becomes a value corresponding to a time after the maximum value has been passed, and the transmission input shaft speed Nin becomes a value corresponding to a time after the speed has started rising.

Then, since the clutch becomes connected after the drive force peak has been passed in this way, even if the degree of engine output suppression is lowered after the drive force peak has been passed (or the engine output suppression control is canceled), a large drive force torque is not input to the drive-train, and it is possible to reduce the size of the drive-train while ensuring drive force during acceleration from standstill.

Note that the above-described principle of the solution to the problem of the present invention, that is to say, lowering the degree of engine output suppression with focus on the time before and the time after the passing of the drive force peak (or canceling the engine output suppression control), is not disclosed in the above-described PTL 1, nor is any disclosure suggesting such a technical idea contained therein.

### Advantageous Effects of Invention

The present invention enables improving acceleration performance and hill-climbing performance while reducing the drive force torque that is input to the drive-train during acceleration from standstill.

### Brief Description of Drawings

[FIG. 1] FIG. 1 is a schematic configuration diagram showing part of a vehicle to which the present invention is applied.
[FIG. 2] FIG. 2 is a schematic configuration diagram of an engine applied in the vehicle of FIG. 1.
[FIG. 3] FIG. 3 is a block diagram showing the configuration of a control system such as an ECU.
[FIG. 4] FIG. 4 is a diagram showing an example of a map used in maximum rotation speed suppression control.
[FIG. 5] FIG. 5 is a flowchart showing an example of control of execution/cancelation of the maximum rotation speed suppression control.
[FIG. 6] FIG. 6 is a diagram showing drive force change in the cases of canceling and not canceling maximum rotation speed suppression control, and drive force change in the case of no maximum rotation speed suppression control.
[FIG. 7] FIG. 7 is a diagram showing the relationship between clutch retraction speed and the amount of decline in engine rotation speed.
[FIG. 8] FIG. 8 is a diagram showing variation in the torque input to the drive-train on the manual transmission output side during acceleration from standstill.
[FIG. 9] FIG. 9 is a diagram showing the relationship between maximum engine rotation speed and engine torque.

### Description of Embodiments

The following is a description of an embodiment of the present invention based on the drawings.

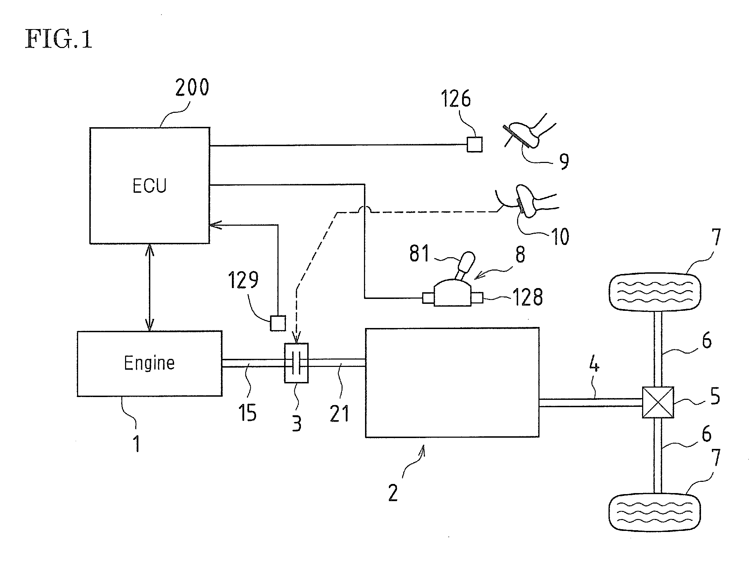

FIG. 1 is a schematic configuration diagram of a vehicle to which the present invention is applied.

The vehicle in this example is a FR (front-engine, rear-wheel drive) type of vehicle, and includes an engine (internal combustion engine) 1 that is the traveling drive source, a manual transmission 2, a clutch 3, a differential gear mechanism 5, an ECU 200, and the like.

A crankshaft 15, which is the output shaft of the engine 1, is connected to the clutch 3, and when the clutch 3 enters the engaged state, the drive force (drive torque) of the engine 1 is transmitted to the differential gear mechanism 5 via the clutch 3, the manual transmission 2, the drive shaft 4, and the like, and then distributed to left and right drive wheels 7 via respective axle shafts 6. The engine 1, the manual transmission 2, the clutch 3, and the ECU 200 are described below.

### - Engine -

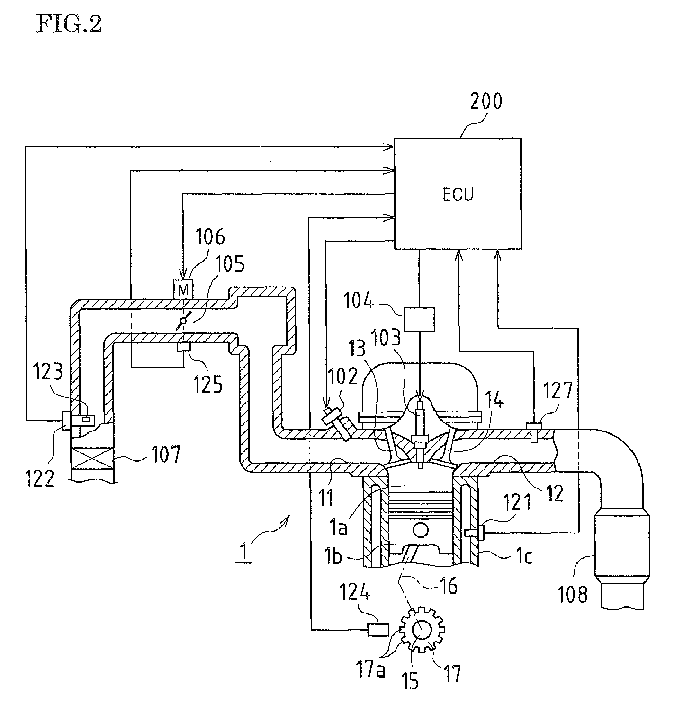

The engine 1 in this example is a multicylinder gasoline engine, for example, and includes a piston 1b that defines a combustion chamber 1a, and the crankshaft 15 that is the output shaft, as shown in FIG. 2. The piston 1b is connected to the crankshaft 15 via a connecting rod 16, and the back and forth movement of the piston 1b is converted into rotation of the crankshaft 15 by the connecting rod 16.

A signal rotor 17 is attached to the crankshaft 15. Multiple protrusions (teeth) 17a are provided equiangularly on the outer circumferential face of the signal rotor 17. An engine rotation speed sensor 124 is disposed in the lateral vicinity of the signal rotor 17. The engine rotation speed sensor 124 is, for example, an electromagnetic pickup, and generates a pulsed signal (output pulses) corresponding to the protrusions 17a of the signal rotor 17 when the crankshaft 15 rotates.

A spark plug 103 is disposed in the combustion chamber 1a of the engine 1. The ignition timing of the spark plug 103 is adjusted by an igniter 104. The igniter 104 is controlled by the ECU 200. A water temperature sensor 121 that detects the engine water temperature (cooling water temperature) is disposed in a cylinder block 1c of the engine 1.

An intake passage 11 and an exhaust passage 12 are connected to the combustion chamber 1a of the engine 1. An intake valve 13 is provided between the intake passage 11 and the combustion chamber 1a, and the intake passage 11 and the combustion chamber 1a are put into communication or blocked off by driving the intake valve 13 so as to open/close. An exhaust valve 14 is provided between the exhaust passage 12 and the combustion chamber 1a, and the exhaust passage 12 and the combustion chamber 1a are put into communication or blocked off by driving the exhaust valve 14 so as to open/close. The open/close driving of the intake valve 13 and the exhaust valve 14 is performed by rotation of an intake camshaft and an exhaust camshaft respectively, to which rotation of the crankshaft 15 is transmitted.

Disposed in the intake passage 11 are an air cleaner 107, a hot-wire air flow meter 122, an intake temperature sensor 123 (built into the air flow meter 122), an electronically-controlled throttle valve 105 for adjusting the intake air amount of the engine 1, and the like. Disposed in the exhaust passage 12 of the engine 1 are an O₂ sensor 127 that detects the oxygen concentration of exhaust gas, a three-way catalyst 108, and the like.

The throttle valve 105 is driven by a throttle motor 106. The opening degree of the throttle valve 105 is detected by a throttle opening degree sensor 125. The throttle opening degree of the throttle valve 105 can be electronically controlled independently of a driver accelerator pedal operation, and the opening degree (throttle opening degree) is detected by the throttle opening degree sensor 125. Also, driving of the throttle motor 106 is controlled by the ECU 200.

Specifically, the throttle opening degree of the throttle valve 105 is controlled so as to obtain an optimal intake air amount (target intake amount) according to the driving state of the engine 1, such as the engine rotation speed detected by the engine rotation speed sensor 124 and the amount that the accelerator pedal is pressed by the driver (accelerator opening degree). More specifically, the actual throttle opening degree of the throttle valve 105 is detected using the throttle opening degree sensor 125, and the throttle motor 106 for the throttle valve 105 is feedback-controlled such that the actual throttle opening degree matches the throttle opening degree to be obtained by the target intake amount (target throttle opening degree).

Also, an injector for fuel injection (fuel injection valve) 102 is disposed in the intake passage 11. A fuel pump supplies fuel from a fuel tank (not shown) to the injector 102 at a predetermined pressure, and the injector 102 injects the fuel into the intake passage 11. The injected fuel mixes with intake air to produce an air-fuel mixture, which is then introduced into the combustion chamber 1a of the engine 1. The air-fuel mixture (fuel + air) introduced to the combustion chamber 1a combusts and explodes upon being ignited by the spark plug 103. The piston 1b moves back and forth due to the combustion and explosion of the air-fuel mixture in the combustion chamber 1a, and thus the crankshaft 15 rotates.

### - Manual transmission and clutch -

The manual transmission 2 is a generally known synchromesh manual transmission (e.g., five forward gears and one reverse gear), and as shown in FIG. 1, an input shaft 21 is connected to the crankshaft 15 of the engine 1 via the clutch 3, and the speed of drive force (drive torque) from the engine 1 is changed according to a predetermined transmission gear ratio and thereafter transmitted to the drive wheels 7.

Although not shown, the manual transmission 2 includes a multi-stage transmission gear array as the transmission mechanism, and is configured such that a shift fork causes a hub sleeve of a synchromesh mechanism to slide in the shaft direction in accordance with the required gear range, thus meshing with either of two transmission gears that are disposed on respective sides of the hub sleeve and are mounted to the exterior of the rotation shaft so as to be capable of relative rotation, thus establishing the necessary gear range.

The shift fork of the manual transmission 2 is operated so as to establish a gear range corresponding to a shift position selected by an operation of a shift lever 81 of a shift device 8. Note that modes of connection of the shift lever 81 and the shift fork include, for example, mechanical connection and electrical connection. In the latter case of an electrical connection mode, a shift-by-wire system is employed in which the shift position selected by the shift lever 81 (e.g., neutral, forward first gear to fifth gear, or reverse first gear) is detected by a shift position sensor 128, and the shift fork is operated by driving a hydraulic actuator based on an electrical signal corresponding to the detected shift position.

The clutch 3 shown in FIG. 1 is a generally known friction-type clutch having a dry single-plate structure, and although not shown, the clutch 3 is configured by a clutch disk, a pressure plate, a diaphragm spring, a release bearing, a mechanical or hydraulic operation mechanism, and the like.

Since the release fork remains stationary while a clutch pedal 10 is not being pressed, that is to say, while an external operation is not being performed, the release bearing does not press against the diaphragm spring, that is to say, the clutch 3 is in a clutch engaged state in which the pressure plate presses a clutch disk against a flywheel connected to the crankshaft 15.

On the other hand, when the clutch pedal 10 is pressed, that is to say, when an external operation is performed, the release fork tilts and the release bearing presses the diaphragm spring to the flywheel side, and the pressure plate is pulled to the side so as to be separated from the flywheel, that is to say, the clutch 3 enters the clutch disengaged state in which the clutch disk is separated from the flywheel.

### - ECU -

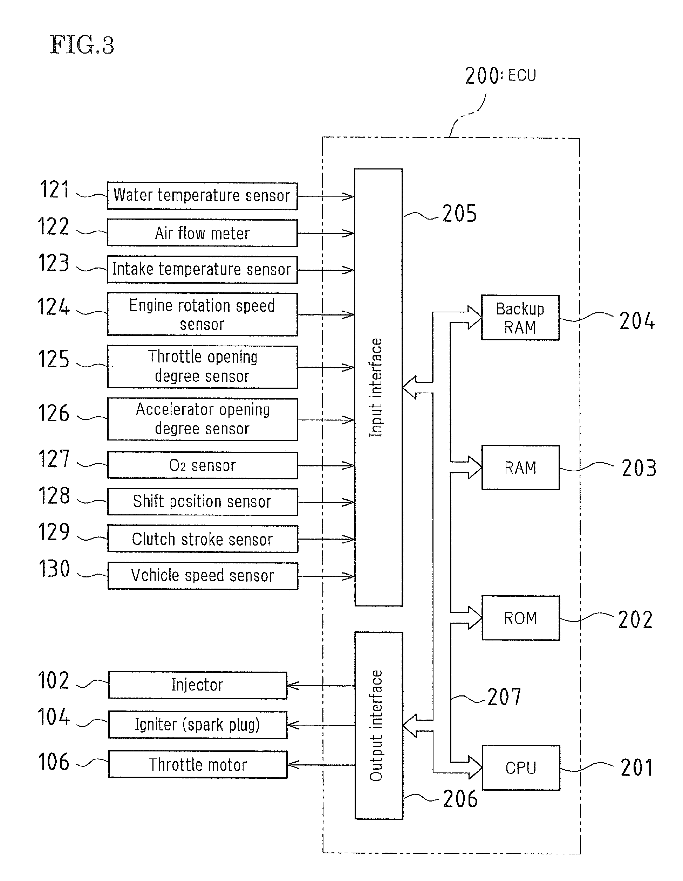

As shown in FIG. 3, the ECU 200 includes a CPU 201, a ROM 202, a RAM 203, a backup RAM 204, an input interface 205, an output interface 206, and the like.

The ROM 202 stores various types of control programs, maps referenced when executing the various types of control programs, and the like. The CPU 201 executes arithmetic processing based on the various types of control programs and maps stored in the ROM 202. The RAM 203 is a memory that temporarily stores the arithmetic results obtained by the CPU 201, data received as input from sensors, and the like, and the backup RAM 204 is a nonvolatile memory that stores data and the like that is to be saved when the engine 1 stops. The ROM 202, the CPU 201, the RAM 203, and the backup RAM 204 are connected to each other via a bus 207, and are connected to the input interface 205 and the output interface 206.

Connected to the input interface 205 of the ECU 200 are the water temperature sensor 121, the air flow meter 122, the intake temperature sensor 123, the engine rotation speed sensor 124, the throttle opening degree sensor 125, the accelerator opening degree sensor 126 that detects the amount that an accelerator pedal 9 (see FIG. 1) has been pressed (accelerator opening degree), the O₂ sensor 127, the shift position sensor 128, a clutch stroke sensor 129 for detecting the stroke position of the clutch 3, a vehicle speed sensor 130, and the like.

Also, connected to the output interface of the ECU 200 are the injector 102, the igniter 104 for the spark plug 103, the throttle motor 106 for the throttle valve 105, and the like.

The ECU 200 executes various types of control of the engine 1 based on output from the various types of sensors described above, including, for example, drive control of the injector 102 (fuel injection control), ignition timing control of the spark plug 103, and drive control of the throttle motor 106 for the throttle valve 105. The ECU 200 furthermore executes the below-described "maximum rotation speed suppression control" and "control of execution/cancelation of maximum rotation speed suppression control".

The control apparatus for a vehicle of the present invention is realized by programs executed by the ECU 200 described above.

### - Maximum rotation speed suppression control -

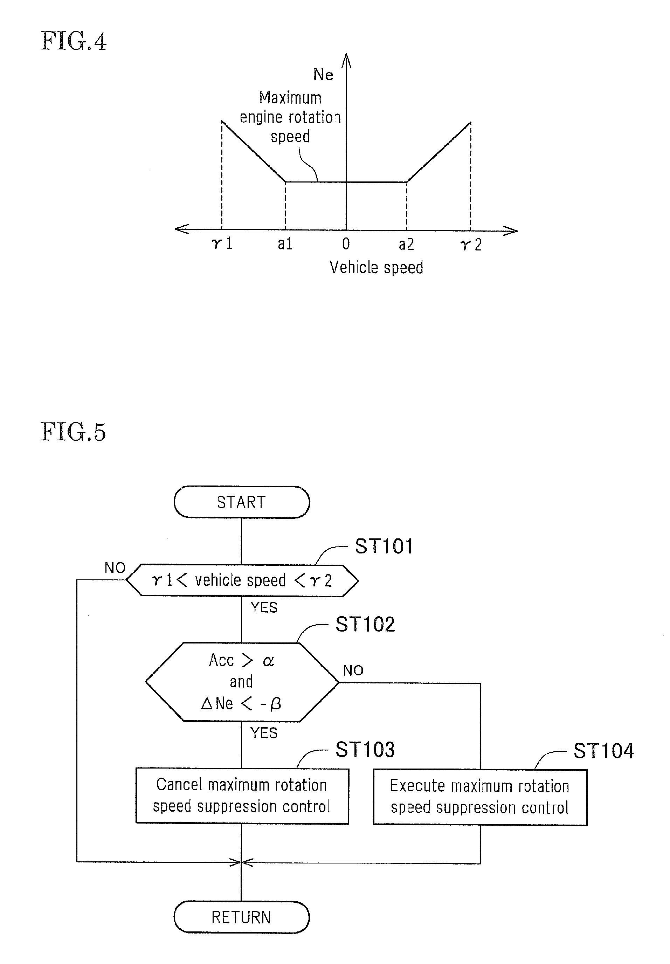

The ECU 200 executes the maximum rotation speed suppression control for controlling the maximum engine rotation speed, until the vehicle has reached a predetermined speed during vehicle acceleration from standstill. Specifically, when the vehicle speed obtained from the output signal from the vehicle speed sensor 130 is in the vehicle speed range [γ1 < vehicle speed < γ2] in the map shown in FIG. 4, the maximum rotation speed of the engine 1 is controlled according to the vehicle speed based on the map. It should be noted that the ECU 200 cancels the maximum rotation speed suppression control when the later-described cancelation condition [(Acc > α) and (ΔNe < -B)] is satisfied.

The map in FIG. 4 is stored in the ROM 202 of the ECU 200, and is obtained by mapping values tailored through experimentation, calculation, and the like using the vehicle speed as the parameter, so as to enable reducing the peak torque of the torque variation (see FIG. 8) input to the drive-train (e.g., the manual transmission 2 and the drive shaft 4) during acceleration from standstill.

In the map shown in FIG. 4, the degree of maximum rotation speed suppression is set constant in the low vehicle speed region (region [a1 to a2]), and the degree of maximum rotation speed suppression is set so as to gradually decrease in the vehicle speed regions in which up-shifting of the transmission 2 is necessary (region [γ1 to a1] and region [a2 to γ2]).

Here, the vehicle speed range shown in the map in FIG. 4, that is to say, the range [γ1 < vehicle speed < γ2] in which maximum rotation speed suppression control is performed in the engine 1, is set using, for example, values tailored through experimentation, calculation, and the like, giving consideration to the magnitude of the peak torque (see FIG. 8), control of shock during acceleration from standstill, the constitution of the drive-train, and the like.

Note that a configuration is possible in which a map similar to that in FIG. 4 is created using time instead of vehicle speed as the parameter, and maximum rotation speed suppression control is executed until the elapsed time since when the vehicle started moving has reached a predetermined time, based on the map.

### - Control of execution/cancelation of maximum rotation speed suppression control -

Next is a description of control of execution/cancelation of the above-described maximum rotation speed suppression control with reference to the flowchart in FIG. 5. The control routine in FIG. 5 is repeatedly executed in the ECU 200 at a predetermined cycle (e.g., approximately several msec to several tens of msec).

Note that during execution of the flowchart in FIG. 5, the ECU 200 calculates an accelerator opening degree Acc (amount the accelerator pedal 9 is pressed) based on an output signal from the accelerator opening degree sensor 126. The ECU 200 also calculates an amount of change ΔNe (hereinafter, referred to as "decline amount ΔNe") in the engine rotation speed Ne based on an output signal from the engine rotation speed sensor 124.

In the flowchart in FIG. 5, in step ST101 a determination is made as to whether the vehicle speed obtained from the output signal from the vehicle speed sensor 130 is in the range [γ1 < vehicle speed < γ2] shown in the map in FIG. 4, and the procedure ends if the determination result is a negative determination. If the determination result of step ST101 is an affirmative determination, the procedure advances to step ST102.

In step ST102, a determination is made as to whether the accelerator opening degree Acc is greater than a determination threshold value α, and furthermore the decline amount ΔNe of the engine rotation speed Ne is less than a determination threshold value [-β], and if the determination result is an affirmative determination, the procedure advances to step ST103. The determination threshold value α and the determination threshold value [-β] will be described later.

Here, as previously mentioned, the engine rotation speed Ne drops if the clutch 3 is connected after the engine rotation speed Ne has remained at the maximum rotation speed while the accelerator pedal 9 is being sufficiently pressed down (accelerator opening degree Acc > α), thus enabling estimating that the peak torque has been passed at that point in time. In view of this, in this example, the maximum rotation speed suppression control is canceled (step ST103) at the point in time when the decline amount ΔNe of the engine rotation speed Ne falls below [-β] while the accelerator pedal 9 is being pressed and the accelerator opening degree Acc continues to be in the state [Acc > α] (e.g., the cancelation timing shown in FIG 8).

On the other hand, in the case of a negative determination in step ST102, the maximum rotation speed suppression control is executed (step ST104).

### - Determination threshold value α -

The determination threshold value α used in the determination processing of step ST102 is a threshold value for determining that the engine rotation speed Ne has necessarily risen in the case where the driver has pressed the accelerator pedal 9 with the intention of accelerating, and is set to a value tailored empirically through experimentation, calculation, and the like, giving consideration to the fact that the engine rotation speed Ne does not decline even if the accelerator pedal 9 (see FIG. 1) retracts while being pressed, and the fact that the engine rotation speed Ne does not decline even if the clutch 3 engages a small amount during acceleration from standstill.

### - Determination threshold value [-β] -

The determination threshold value [-β] used in the determination processing of step ST102 is a threshold value for preventing an erroneous determination regarding decline of the engine rotation speed Ne, and is set to a value that is tailored empirically through experimentation, calculation, and the like and that enables distinguishing between decline in the engine rotation speed Ne due to noise, turning the air conditioner on, or the like (erroneous decline determination), and decline in the engine rotation speed Ne when the clutch 3 is connected after the engine rotation speed Ne has remained at the maximum rotation speed.

As described above, according to this example, it is possible to improve acceleration performance and hill-climbing performance while reducing the drive force torque input to the drive-train (e.g., the manual transmission 2 and the drive shaft 4) during acceleration from standstill.

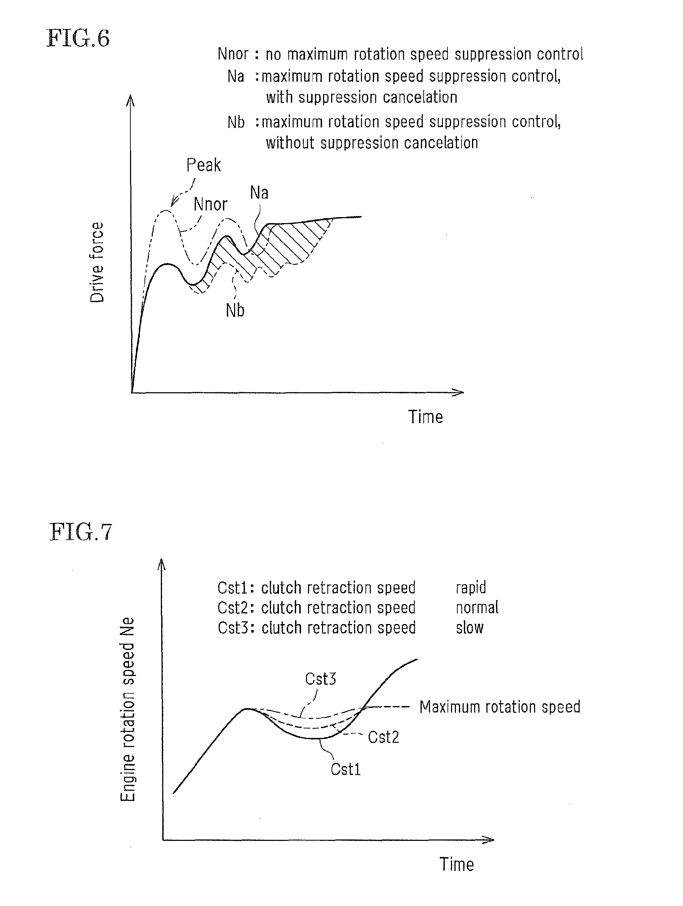

More specifically, by restricting the maximum rotation speed of the engine rotation speed Ne through the maximum rotation speed suppression control until the peak torque has been passed during vehicle acceleration from standstill, it is possible to reduce the peak drive force more than in the case of not implementing the maximum rotation speed suppression control (Nnor), as shown in FIG. 6. Moreover, the maximum rotation speed suppression control is canceled after the passing of the peak torque, thus enabling ensuring drive force. In other words, in comparison with the case where the maximum rotation speed suppression control is not canceled (Nb shown in FIG. 6), the case where the maximum rotation speed suppression control is canceled (Na shown in FIG. 6) enables obtaining a greater amount of drive force in an amount corresponding to the area of the hatched region in FIG. 6. This enables ensuring drive force during acceleration from standstill while reducing the peak torque input to the drive-train during acceleration from standstill, and enables improving acceleration performance and hill-climbing performance.

### - Other embodiments -

In the above example, the maximum rotation speed suppression control is canceled upon determining that the peak torque has been passed when the decline amount ΔNe of the engine rotation speed Ne has fallen below the determination threshold value [-β] while the accelerator opening degree Acc is greater than the determination threshold value α, but the present invention is not limited to this, and a configuration is possible in which the degree of maximum rotation speed suppression is set so as to be lower after the peak torque has been passed than before it has been passed. Also, in this case, a configuration is possible in which, in accordance with the decline in the engine rotation speed after the peak torque has been passed, the degree of maximum rotation speed suppression (degree of engine output suppression) is set so as to be lower in the case where the rotation speed decline is large than the case where it is small.

In the above example, the maximum rotation speed suppression control is canceled upon determining that the peak torque has been passed when the decline amount ΔNe of the engine rotation speed Ne has fallen below the determination threshold value [-β] while the accelerator opening degree Acc is greater than the determination threshold value α, but the present invention is not limited to this. For example, a configuration is possible in which the maximum rotation speed suppression control is canceled based on the speed of the clutch engagement operation (clutch retraction speed) while the accelerator opening degree Acc is greater than the determination threshold value α during vehicle acceleration from standstill. This point will now be described with reference to FIG. 7.

First, if [the case of a rapid clutch engagement operation (the case of a high clutch retraction speed)], [the case of a normal clutch engagement operation], and [the case of a slow clutch engagement operation] while the accelerator pedal 9 is being sufficiently pressed (while accelerator opening degree Acc > α) are compared (same condition as that for the amount that the accelerator pedal has been pressed), it can be seen that, as shown in FIG. 7, the faster the clutch engagement operation is (the higher the clutch retraction speed is), the more the engine rotation speed decline amount ΔNe increases. Here, Cst1 shown in FIG. 7 is the case where the clutch retraction speed is high, which is the case where the driver intends to accelerate from standstill with a high drive force. In contrast, Cst2 is the case of normal acceleration from standstill, and Cst3 is the case of slow acceleration from standstill. In consideration of this point, a configuration is possible in which, for example, the clutch retraction speed is calculated from the output signal from the clutch stroke sensor 129, and the maximum rotation speed suppression control is canceled if the clutch retraction speed is greater than a determination threshold value δ (e.g., δ = [Cst2 clutch retraction speed + margin]). According to this configuration, the maximum rotation speed suppression is canceled if the clutch retraction speed is high (Cst1) as shown in FIG. 7, thus enabling ensuring the drive force required by the driver.

Note that if the speed of the clutch engagement operation is used as a parameter, a configuration is possible in which the degree of engine output suppression is set so as to be lower in the case where the clutch engagement operation is rapid than the case where it is slow. In this case, it sufficient to, for example, set the degree of maximum rotation speed suppression (degree of engine output suppression) so as to be lower in the case of the clutch retraction speed (clutch engagement operation speed) Cst2 shown in FIG. 7 than the case of the clutch retraction speed Cst3, and set the degree of maximum rotation speed suppression so as to be lower in the case of the clutch retraction speed Cst1 than the case of the clutch retraction speed Cst2.

Also, a configuration is possible in which the passing of the peak torque is determined based on a parameter related to engine output other than the engine rotation speed, and the degree of maximum rotation speed suppression (degree of engine output suppression) is set so as to be lower after the peak torque has been passed than before it has been passed.

For example, in the case where the vehicle is equipped with a torque sensor that detects the engine torque, a configuration is possible in which the engine torque is read from an output signal from the engine torque sensor, and the maximum rotation speed suppression control (engine output suppression control) is canceled when the read value has passed the first peak torque shown in FIG. 8 (cancelation timing). Also, in the case where the vehicle is equipped with an acceleration sensor that detects the forward and reverse acceleration speed of the vehicle, a configuration is possible in which the output signal is read from the acceleration sensor, and the maximum rotation speed suppression control (engine output suppression control) is canceled when the read value has passed the first peak.

Although the case of controlling the suppression of the maximum engine rotation speed is described in the above examples, the present invention is not limited to this, and is also applicable to controlling the suppression of another parameter related to engine output, such as the engine torque. The present invention is also applicable to any other suppression control, as long as the suppression of engine output during acceleration from standstill is controlled.

Although the example in which the present invention is applied to the control of a vehicle having a port injection-type gasoline engine mounted therein is described in the above examples, the present invention is not limited to this, and is also applicable to the control of a vehicle having an in-cylinder injection-type gasoline engine mounted therein. Also, the present invention is not limited to the control of a vehicle having a gasoline engine mounted therein, and is also applicable to the control of a vehicle having another engine mounted therein, such as a diesel engine.

Furthermore, the present invention is not limited to an FR (front-engine, rear-wheel drive) vehicle, and is also applicable to the control of various types of vehicles, such as an FF (front-engine, front-wheel drive) vehicle or a four-wheel drive vehicle.

The present invention can be embodied in various other forms without departing from the spirit and essential characteristics thereof. Therefore, the above-described embodiments are considered in all respects as illustrative and not restrictive. The scope of the present invention is indicated by the appended claims rather than by the foregoing description. All variations and modifications falling within the equivalency range of the appended claims are intended to be embraced therein.

This application claims priority on Patent Application No. 2009-006644 filed in Japan on January 15, 2009. The entire contents thereof are herein incorporated in this application by reference. Also, the entirety of the documents cited in this description are herein specifically incorporated by reference.

### Industrial Applicability

The present invention is applicable to a control apparatus for a vehicle in which the engine is connected to a manual transmission via a clutch, and more specifically can be used in a control apparatus for a vehicle in which control of the suppression of engine output in the case of vehicle acceleration from standstill is executed.

### Reference Signs List

- 1: engine
- 2: manual transmission
- 3: clutch
- 9: accelerator pedal
- 10: clutch pedal
- 124: engine rotation speed sensor
- 126: accelerator opening degree sensor
- 129: clutch stroke sensor
- 130: vehicle speed sensor
- 200: ECU

## Claims

1. A control apparatus for a vehicle that is applied to a vehicle in which an engine and a manual transmission are mounted, the engine being connected to the manual transmission via a clutch, and that comprises a suppression means that suppresses engine output at the time of vehicle acceleration from standstill,
wherein the suppression means sets a degree of engine output suppression so as to be lower after a drive force peak of the engine has been passed in comparison to before the drive force peak of the engine has been passed.

2. The control apparatus for a vehicle according to claim 1,
wherein the degree of engine output suppression is set so as to be lower in a case where an engagement operation of the clutch is rapid in comparison to a case where the engagement operation of the clutch is slow.

3. The control apparatus for a vehicle according to claim 1 or 2,
wherein the degree of engine output suppression is set so as to be lower in a case where decline of the engine rotation speed after the drive force peak has been passed is large in comparison to a case where decline of the engine rotation speed after the drive force peak has been passed is small.

4. The control apparatus for a vehicle according to any one of claims 1 to 3,
wherein the degree of engine output suppression is set so as to be lower in a case where a drive force generation request is greater than a determination threshold value.

5. The control apparatus for a vehicle according to any one of claims 1 to 4,
wherein in a case where a drive force generation request is greater than a determination threshold value, when a decline in engine rotation speed has occurred, a determination is made that a drive force peak has been passed.

6. The control apparatus for a vehicle according to any one of claims 1 to 5,
wherein engine output suppression is canceled after a drive force peak of the engine has been passed at the time of vehicle acceleration from standstill.
